# EUROPÄISCHE PATENTANMELDUNG

(11) **EP 2 181 909 A1**
(43) Veröffentlichungstag der Anmeldung: **05.05.2010**
(21) Anmeldenummer: 09174005.0
(22) Anmeldetag: 26.10.2009
(51) Int. Cl.: B62D 5/04

(54) **Lenkung**

(30) Priorität: 28.10.2008 DE 102008043214
(71) Anmelder: ZF Lenksysteme GmbH, 73527 Schwäbisch Gmünd (DE)
(72) Erfinder: Hauck, Michael, 73630, Remshalden (DE); Vaupel, Simon, 73550, Waldstetten (DE)

(57) **Zusammenfassung**

Die Erfindung betrifft eine Lenkung, insbesondere mit elektromotorischer Hilfskraftunterstützung für ein Kraftfahrzeug, mit einem eine Schnecke und ein Schneckenrad (30) aufweisenden Schneckengetriebe, wobei das Schneckenrad (30) und die Schnecke miteinander in Eingriff stehen und bei dem Schneckenrad (30) die Verzahnung (31) aus Kunststoff gefertigt ist. Bei denen aus dem Stand der Technik bekannten Lenkungen ist das Schneckenrad lediglich im Bereich der Verzahnung aus Kunststoff gefertigt, wohingegen der Rest des Schneckenrads aus Metall gefertigt ist. Ein solches Schneckenrad ist teuer zu fertigen, weist ein hohes Massenträgheitsmoment und eine schlechte akustische Dämpfung auf. Deshalb ist erfindungsgemäß das Schneckenrad (30) komplett aus Kunststoff gefertigt.

## Beschreibung

Die Erfindung betrifft eine Lenkung, insbesondere mit elektromotorischer Hilfskraftunterstützung für ein Kraftfahrzeug, mit einem eine Schnecke aufweisenden Schneckengetriebe, wobei das Schneckenrad und die Schnecke miteinander in Eingriff stehen und bei dem Schneckenrad die Verzahnung aus Kunststoff gefertigt ist.

Bisher sind aus dem Stand der Technik gattungsgemäße Lenkungen bekannt, bei denen das Schneckenrad lediglich im Bereich der Verzahnung aus Kunststoff gefertigt ist, wohingegen der Rest des Schneckenrads aus Metall gefertigt ist. Der aus Metall gefertigte Bereich des Schneckenrads weist in der Regel eine Passung zum Aufpressen des Schneckenrads auf eine Welle auf. Nachteilig bei diesem Schneckenrad ist jedoch der relativ hohe Fertigungsaufwand, wodurch es teuer wird. Außerdem weist das vorwiegend aus Metall gefertigte Schneckenrad eine hohe Masse und somit ein hohes Massenträgheitsmoment auf. Ferner weist es eine sehr schlechte akustische Dämpfung auf.

Die Erfindung hat die Aufgabe eine Lenkung der eingangs genannten Art dahingehend zu verbessern, dass zukünftig die o. g. Nachteile vermieden werden.

Die Erfindung löst die gestellte Aufgabe mit einer Lenkung der eingangs genannten Art, bei der erfindungsgemäß das Schneckenrad komplett aus Kunststoff gefertigt ist. Ein solches Schneckenrad kann relativ preiswert mit geringem Fertigungsaufwand hergestellt werden. Wegen der günstigen Dämpfungseigenschaften von Kunststoff, weist das Schneckenrad eine gute akustische Dämpfung auf. Aufgrund der verhältnismäßig geringen Dichte im Vergleich zu Metall ist auch die Masse sowie das Massenträgheitsmoment deutlich geringer als bei einem vorwiegend aus Metall gefertigten Schneckenrad.

In einer bevorzugten Ausführungsform kann eine Nabe des Schneckenrads aus Kunststoff und/oder aus Metall gefertigt sein.

Insbesondere, wenn die Nabe aus einem faserverstärkten Kunststoff hergestellt wird, weist das Schneckenrad im Bereich der Nabe eine genügend hohe Festigkeit auf, um ein Drehmoment zwischen der Nabe und einer Welle übertragen zu können. Das gleiche gilt natürlich auch, wenn die Nabe aus Metall gefertigt ist.

Der Bereich zwischen der Verzahnung und der Nabe kann aus mindestens einem Kunststoff gefertigt sein. In diesem Fall ist es beispielsweise möglich mehrere, aus verschiedenen Kunststoffen hergestellte konzentrische Ringe zwischen der Verzahnung und der Nabe vorzusehen, wobei die verschiedenen Kunststoffe entsprechend ihrer Beanspruchung unterschiedliche Festigkeiten aufweisen. So ist es beispielsweise auch möglich, dass in dem Bereich zwischen der Verzahnung und der Nabe verstärkte und unverstärkte Kunststoffe vorgesehen werden.

Das Schneckenrad kann auf eine Welle oder auf die Nabe spritzgiesbar oder gießbar sein. Insbesondere bei großen Stückzahlen ist dies eine sehr kostengünstige und automatisierbare Fertigungsmethode. Selbstverständlich kann das Schneckenrad auf die Welle oder auf die Nabe auch auf konventionelle Weise montiert werden, wie beispielsweise durch Aufpressen.

In einer Weiterbildung der Erfindung kann die Welle einen umlaufenden Absatz aufweisen. Beim Spritzgießen kann durch den umlaufenden Absatz ein Spritzgusswerkzeug zuverlässig abgedichtet werden.

Für die zuverlässige Übertragung des Drehmomentes zwischen dem Schneckenrad und der Welle kann das Schneckenrad im Übergangsbereich zur Welle eine formschlüssige Verbindung besitzen. Dies kann ebenfalls eine Verzahnung sein, wie beispielsweise eine Rändelung, eine Keilwellenverzahnung, oder ein vielkantig ausgebildeter Umfang der Welle am Übergang zum Schneckenrad.

Um einen unnötigen Verschleiß der Schnecke zu vermeiden, ist es günstig, die mit der Schnecke in Eingriff stehende Verzahnung aus einem unverstärkten Kunststoff herzustellen.

Ferner betrifft die Erfindung auch ein Kraftfahrzeug, das erfindungsgemäß mit einer Lenkung nach einem der Ansprüche 1 bis 8 ausgerüstet ist.

Nachfolgend werden verschiedene Ausführungsbeispiele der Erfindung anhand der beiliegenden Zeichnungen näher beschrieben.

Im einzelnen zeigen:
- Fig. 1: eine Lenkung;
- Fig. 2: eine erste Ausführungsform eines Schneckenrads;
- Fig. 3: eine zweite Ausführungsform des Schneckenrads;
- Fig. 4: eine dritte Ausführungsform des Schneckenrads.

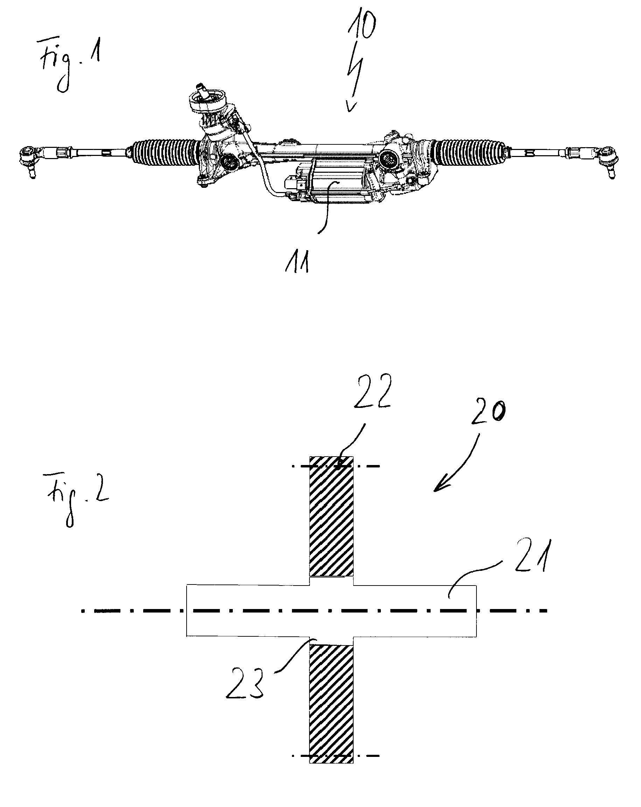

Fig. 1 zeigt eine Lenkung 10 mit einem Elektromotor 11 zur elektromotorischen Hilfskraftunterstützung. Zur Untersetzung des Motormoments ist ein hier nicht näher dargestelltes Schneckenradgetriebe vorgesehen.

Fig. 2 zeigt ein Schneckenrad 20, das auf einer Welle 21 angeordnet ist. Das Schneckenrad 20 ist aus einem einzigen Kunststoff hergestellt, einschließlich seiner Verzahnung 22. Vorzugsweise wird es direkt auf die Welle 21 spritzgegossen. Die Welle 21 weist einen Absatz 23 auf. Der Absatz 23 dichtet ein Spritzgusswerkzeug während des Spritzgießens zuverlässig ab.

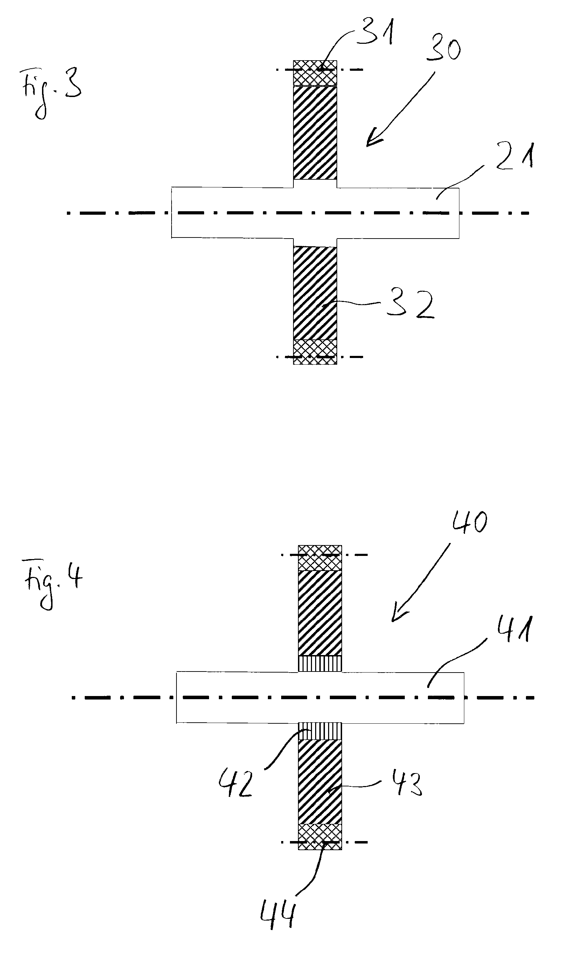

Fig. 3 in zeigt ein Schneckenrad 30, das im Bereich seiner Verzahnung 31 mit einem ersten Kunststoff, der vorzugsweise ein unverstärkter Kunststoff ist, gefertigt ist. Im Bereich 32, der sich zwischen der Welle 21 und der Verzahnung 31 befindet, ist das Schneckenrad 30 aus einem zweiten Grundstoff, der vorzugsweise ein verstärkter Kunststoff ist, hergestellt. Somit wird durch die aus dem unverstärkten Kunststoff hergestellte Verzahnung 31 ein unnötiger Verschleiß einer in das Schneckenrad 30 eingreifenden, hier nicht näher dargestellten Schnecke vermieden. Dahingegen stellt der aus dem verstärkten Kunststoff hergestellte Bereich 32 eine zuverlässige Drehmomentenübertragung zwischen der Verzahnung 31 und der Welle 21 sicher.

Eine weitere Alternative zeigt Fig. 4 mit dem Schneckenrad 40. Es ist auf eine Welle 41 aufgebracht, das in seinem Übergangsbereich zur Welle 41 eine Nabe 42 aufweist, die aus einem vorzugsweise verstärkten Kunststoff oder aus Metall gefertigt sein kann. Die Nabe 41 ist umgeben von einem ringförmigen Bereich 43, der vorzugsweise ebenfalls aus einem verstärkten Kunststoff hergestellt ist. Den Bereich 43 umgibt schließlich eine aus einem vorzugsweise unverstärkten Kunststoff hergestellte Verzahnung 44. Bei dem Schneckenrad 40 sind somit die Nabe 42, der Bereich 43 und die Verzahnung 44 konzentrisch zueinander angeordnet und jeweils aus verschiedenen Materialien hergestellt, die jeweils auf ihre jeweilige Beanspruchung optimal abgestimmt sind.

### Bezugszeichenliste

- 10: Lenkung
- 11: Elektromotor

- 20: Schneckenrad
- 21: Welle
- 22: Verzahnung
- 23: Absatz

- 30: Schneckenrad
- 31: Verzahnung
- 32: Bereich

- 40: Schneckenrad
- 41: Welle
- 42: Nabe
- 43: Bereich
- 44: Verzahnung

## Patentansprüche

1. Lenkung (10), insbesondere mit elektromotorischer Hilfskraftunterstützung für ein Kraftfahrzeug, mit einem eine Schnecke und ein Schneckenrad (20, 30, 40) aufweisenden Schneckengetriebe, wobei das Schneckenrad (20, 30, 40) und die Schnecke miteinander in Eingriff stehen und bei dem Schneckenrad (20, 30, 40) die Verzahnung (22, 31, 44) aus Kunststoff gefertigt ist, **dadurch gekennzeichnet, dass** das Schneckenrad (20, 30, 40) komplett aus Kunststoff gefertigt ist.

2. Lenkung (10) nach Anspruch 1, **dadurch gekennzeichnet, dass** eine Nabe (42) des Schneckenrads aus Kunststoff und/oder aus Metall gefertigt ist.

3. Lenkung (10) nach Anspruch 1 oder 2, **dadurch gekennzeichnet, dass** der Bereich (43) zwischen der Verzahnung (44) und der Nabe (42) aus mindestens einem Kunststoff gefertigt ist.

4. Lenkung (10) nach einem der Ansprüche 1 bis 3, **dadurch gekennzeichnet, dass** das Schneckenrad (20, 30, 40) auf eine Welle (21) oder auf die Nabe (42) spritzgiesbar oder gießbar ist.

5. Lenkung (10) nach Anspruch 4, **dadurch gekennzeichnet, dass** die Welle (21) einem umlaufenden Absatz (23) aufweist.

6. Lenkung (10) nach einem der Ansprüche 1 bis 5, **dadurch gekennzeichnet, dass** das Schneckenrad im Übergangsbereich zur Welle eine formschlüssige Verbindung besitzt.

7. Lenkung (10) nach einem der Ansprüche 2 bis 6, **dadurch gekennzeichnet, dass** die Nabe (23) aus einem faserverstärkten Kunststoff herstellbar ist.

8. Lenkung (10) nach einem der Ansprüche 1 bis 7, **dadurch gekennzeichnet, dass** die mit der Schnecke in Eingriff stehende Verzahnung (22, 31, 44) aus einem unverstärkten Kunststoff herstellbar ist.

9. Kraftfahrzeug, **dadurch gekennzeichnet, dass** es eine Lenkung (10) nach einem der Ansprüche 1 bis 8 aufweist.
